Europäisches Patentamt

European Patent Office

Office européen des brevets

(19)

(11) **EP 1 021 787 B1**

(12) **EUROPÄISCHE PATENTSCHRIFT**

(45) Veröffentlichungstag und Bekanntmachung des Hinweises auf die Patenterteilung:
**30.03.2005 Patentblatt 2005/13**

(21) Anmeldenummer: **98951226.4**

(22) Anmeldetag: **26.08.1998**

(51) Int Cl.7: **G06K 9/00**

(86) Internationale Anmeldenummer:
**PCT/DE1998/002513**

(87) Internationale Veröffentlichungsnummer:
**WO 1999/010832 (04.03.1999 Gazette 1999/09)**

(54) **VERFAHREN ZUM LOKALISIEREN VON OBJEKTEN IN STANDBILDERN MIT ANWENDUNG AUF DIE LOKALISIERUNG VON GESICHTERN**

METHOD FOR LOCALIZING OBJECTS IN STILL IMAGES USED TO LOCALIZE FACES

PROCEDE DE LOCALISATION D'OBJETS DANS DES IMAGES INANIMEES POUVANT ETRE APPLIQUE A LA LOCALISATION DE VISAGES

(84) Benannte Vertragsstaaten:
**DE FR GB**

(30) Priorität: **27.08.1997 DE 19737384**

(43) Veröffentlichungstag der Anmeldung:
**26.07.2000 Patentblatt 2000/30**

(73) Patentinhaber: **Cognitec Systems GmbH**
**01139 Dresden (DE)**

(72) Erfinder:
 • **PRÜGEL-BENNETT, Adam**
 **Southhampton SO17 1BJ (GB)**
 • **KUNSTMANN, Niels**
 **D-81369 München (DE)**

(74) Vertreter: **Stenzel, Rolf**
 **Königsbrücker Strasse 61**
 **01099 Dresden (DE)**

(56) Entgegenhaltungen:
 **WO-A-96/42040       FR-A- 2 691 033**

 • **L. J. SIEGEL ET AL.: "Parallel Image Correlation" PROCEEDINGS 1981 INTERNATIONAL CONFERENCE ON PARALLEL PROCESSING, COLUMBUS, OHIO, US, 25. - 28. August 1981, Seiten 190-198, XP002089641**
 • **K. POIKE: "Untersuchungen zu einem Multifontklassifikator für Grossbuchstaben" WISSENSCHAFTLICHE BERICHTE AEG TELEFUNKEN., Bd. 47, Nr. 3/4, 1974, Seiten 119-130, XP002089642 BERLIN DE**
 • **Reference manual of the ANA data processing language and program, Louis Strous, 1995-98, Mathematical Routines (Section 10.12) and RUNCOM (Section 14.4.277), April 1998,**

**Beschreibung**

Das Lokalisieren von Objekten in Bildern stellt ein wesentliches Problem der automatischen Bildverarbeitung dar. Die Aufgabe besteht dabei darin, in einem Standbild oder in einer Serie von Videobildern bestimmte Objekte zu finden und deren Position möglichst genau festzustellen.

Der besondere Schwierigkeitsgrad dieses Problems rührt von der Variabilität des Erscheinungsbildes des Objekts her. Diese Variabilität hat verschiedene Ursachen. Zum einen ist meist nicht gefordert, ein einziges, klar definiertes Objekt zu finden, sondern eine ganze Klasse von Objekten, wie zum Beispiel Gesichter mit Blickrichtung Kamera. Weiterhin sind die Objekte im Gegensatz zu ihrer Repräsentation im betrachteten Bild dreidimensional, wodurch der speziellen Beleuchtung eine große Bedeutung zukommt.

Anwendungen von Verfahren zum Lokalisieren von Objekten in Standbildern gibt es zum Beispiel bei Überwachungssystemen und Videokonferenzen. Der Schwerpunkt einer speziellen Anwendung kann dabei auf der Geschwindigkeit eines Systems oder seiner Lokalisierungsgenauigkeit liegen. Demzufolge existiert bereits eine Reihe von Methoden und Systemen zum Lokalisieren von Objekten in Standbildern, deren unterschiedliche Charakteristika zunächst dargestellt werden sollen. Dabei werden nur Systeme betrachtet, die Verallgemeinerungen und Verbesserungen der Mustererkennung durch Auswertung der Kreuzkorrelation (template-matching by cross correlation), wie man sie in Standardwerken zur digitalen Bildverarbeitung findet (z. B. A. K. Jain 1989 *Fundamentals of Digital Image Processing* Prentice Hall, Englewood Cliffs, New Jersey), darstellen. Hierdurch ergibt sich eine Abgrenzung zu sogenannten "bottom-up"-Verfahren, die erst signifikante Teile von Objekten finden, um dann anschließend durch Analyse der räumlichen Verhältnisse der vermuteten Objektteile und eventuell der Signifikanz dieser Vermutungen das Gesamtobjekt zu lokalisieren. Ein derartiges "bottom-up" Verfahren mit Anwendung auf die Gesichtserkennung ist beispielsweise in H.-P. Graf, T. Chen, E. Petajan und E. Cosatto 1995 *Locating Faces and Facial Parts* Int. Workshop on Automatic Face- and Gesture-Recognition dargestellt.

Die nachfolgende Numerierung bekannter "template-matching"-Verfahren zum Lokalisieren von Objekten in Standbildern bezieht sich auf das Literaturverzeichnis am Ende der Beschreibung.

Zu 1:

Hier wird ein Verfahren zum Lokalisieren von Frontalansichten von Gesichtern in Standbildern vorgestellt, das mit Beispielen trainiert wird. Da die Abfolge von Aktionen prototypisch für auf "template-matching" basierende Verfahren ist, soll es an dieser Stelle etwas ausführlicher dargestellt werden.

Um in dem Ausgangsbild Gesichter unterschiedlicher Größe finden zu können, wird das Ausgangsbild auf unterschiedliche Auflösungsstufen herunterskaliert ("downscaling"), in denen dann mit einer Maske fester Größe separat nach Gesichtern gesucht wird. Auf jedem der herunterskalierten Bilder wird an jeder möglichen Position der Maske ausgewertet, ob dort ein Gesicht vorliegt. Innerhalb der Maske werden die Pixelwerte zunächst einer Vorverarbeitung unterzogen. Im speziellen Fall handelt es sich dabei um die Subtraktion der besten linearen Approximation an die Pixelwerte sowie um eine Histogrammequalisierung.

Das derart vorverarbeitete Pixelmuster wird anschließend einem Klassifikator zugeführt. Im speziellen Fall besteht der Klassifikator aus jeweils sechs Prototypen einerseits für Gesichter und andererseits für diejenigen Muster, die keine Gesichter darstellen. Die Verteilung von Mustern in der Umgebung der Prototypen wird durch multivariate Gaußverteilungen modelliert, wobei als Klassifikationskriterium die Mahalanobis-Distanz verwendet wird (siehe z. B. K. V. Mardia, J. T. Kent, J. M. Bibby 1994 *Multivariate Analysis* Academic Press).

Bezeichnet man mit $\vec{l}$ die Pixelwerte nach der Vorverarbeitung und mit $\vec{p}$ einen der insgesamt zwölf Prototypen, so ist der gegenseitige Abstand durch $(\vec{l} - \vec{p})^t M (\vec{l} - \vec{p})$ mit $M$ als Abstandsmatrix gegeben. Falls die ursprüngliche Maske $n$ Bildpunkte umfaßt, so sind die Vektoren $\vec{l}$ und $\vec{p}$ jeweils $n$-dimensional und man benötigt zur Berechnung insgesamt $n^2$ Multiplikationen. Diese Anzahl von Multiplikationen erhält man für alle zwölf Prototypen und für jede Positionierung der Maske. Um hier die Rechenzeit zu verringern, führen Sung und Poggio eine Eigenvektorzerlegung der verschiedenen Matrizen $M$ aus und beschränken die Mahalanobis-Distanz auf die zu den größeren Eigenwerten gehörenden Eigenvektoren. Die Ersparnis an Rechenzeit beträgt bei ihnen etwa einen Faktor 3 bis 4.

Ein anhand von Beispielen trainiertes neuronales Netz dient dann zur endgültigen Beurteilung der Abstände des Eingangsmusters zu den Prototypen und damit zur Entscheidung, ob an der betreffenden Stelle ein Gesicht vorliegt oder nicht.

Die Prototypen $\vec{p}$ und die Matrizen $M$ werden durch ein auf ellipsoidförmige Verteilungen angepaßtes, modifiziertes k-means-Clustering trainiert (siehe z. B. R. O. Duda und P. E. Hart 1973 *Pattern Classification and Scene Analysis* Wiley), wobei das Training für die Prototypen (Cluster) der positiven Muster (Gesichter) und der negativen Muster separat erfolgt.

Sung und Poggio verwenden zur Generierung von negativen Trainingsmustern, d. h. von Mustern, die nicht Gesichtern entsprechen, das sogenannte "boot-strapping". Dabei werden für einen bestimmten Zustand der Parameter des Klassifikators (Clusterzentren, Kovarianzmatrizen und Netzwerkparameter) fälschlich als Gesichter klassifizierte Muster der negativen Trainingsmenge hinzugefügt. Dadurch erreicht man eine kontinuierliche Verbesserung der Erkennungsergebnisse.

Die positive Trainingsmenge wird aus einer Menge von annotierten, d. h. von in ihrer Lage innerhalb der Maske genau ausgerichteten Gesichtsbildern erzeugt. Diese ursprünglichen Bilder werden dazu einer Menge von leichten Verzerrungen, wie z. B. kleinen Rotationen, sowie der Spiegelung unterworfen. Somit erhält man für jedes annotierte Gesicht mehrere positive Trainingsmuster.

Das neuronale Netz ist ein Vielschichten-Perzeptron, das durch das Standardverfahren Backpropagation trainiert wird (siehe z. B. D. Rumelhart und J. McClelland *1986 Parallel Distributed Processing* MIT Press).

Der wesentliche Nachteil dieses Verfahrens ist der extreme Zeitbedarf. Dieser hat mehrere Ursachen:

1. Das Herunterskalieren der Bilder ist in der vorliegenden Implementierung recht zeitintensiv. Bei der Berechnung müssen für jede Auflösungsstufe alle Pixel aufsummiert werden, so daß sich für ein Ausgangsbild der Größe $n{\times}h$ und $s$ verschiedene Auflösungen $snh$ Operationen ergeben.

2. Die Histogrammequalisierung, die für jede Maskenposition separat durchgeführt werden muß, benötigt wegen der enthaltenen Summenbildung und Berechnung der Lookup-Tabelle viel Rechenzeit.

3. Für jede Maskenposition muß insgesamt zwölfmal eine Mahalanobis-Distanz berechnet werden. Demgegenüber fällt die Zeit zur Berechnung der Netzwerkausgabe kaum ins Gewicht.

Ein weiterer Nachteil besteht darin, daß die Position der Objekte nur bis zur Pixelgenauigkeit der herunterskalierten Bilder festgestellt werden kann. Wenn eine genauere Positionierung erwünscht ist, müssen andere Verfahren hinzugezogen werden.

Zu 2:

Auch das Verfahren von Rowley et al. basiert auf Prototypen und nachfolgender Anwendung eines neuronalen Netzwerks. In seiner speziellen Ausprägung gibt es nur unwesentliche Unterschiede zu 1. Zur Verbesserung der Leistungsfähigkeit wird die parallele Verwendung mehrerer neuronaler Netze vorgeschlagen. Die Generierung der positiven Trainingsmenge wird hier genauer beschrieben. Sie enthält nun explizit auch kleine Translationen und Skalierungsänderungen. Damit erhält man eine der Granularität der herunterskalierten Bilder angepaßte Erzeugung von Trainingsmustern. Die induzierten Translationen müssen dabei ±½ Pixel der Suchmaske betragen. Die Skaleninvarianz muß den Abstand der Auflösungen zwischen den einzelnen herunterskalierten Bildern kompensieren.

Auch Rowley et al. versuchen, ihr Verfahren zu beschleunigen. Sie erhöhen die Translationsinvarianz der Prototypen durch entsprechend modifizierte Trainingsmuster, um den relativen Vorschub der Maske vergrößern zu können und so zu einer Verminderung der Anzahl der Klassifikationen zu kommen. Dies ermöglicht nach Aussage der Autoren eine Geschwindigkeitsverbesserung um einen Faktor 20, was aber auf Kosten der Leistungsfähigkeit des Systems geht.

Zu 3:

Vaillant et al. schlagen ein zweistufiges Verfahren zur Lokalisierung von Gesichtern vor. Dabei ist die erste Stufe ein vom Aufbau her sehr einfaches neuronales Netz. Da sich in dem Netzwerk verschiedene Verbindungen ihre Gewichte teilen (sogenannte "shared weights"), ist der Rechenaufwand gering, was aber auf Kosten der Diskriminierungsfähigkeit bezüglich der Position geht. Es werden für ein Eingangsbild nur relativ ausgedehnte Bereiche bestimmt, in denen Gesichter vorliegen können. Weiterhin geben die Autoren an, daß zum Training des Netzes mehrere Stunden Rechenzeit auf einer Standard-Workstation erforderlich seien.

Die vom ersten Klassifikator gelieferten Bereiche werden zu Hypothesen zusammengefasst und dem zweiten Klassifikator, ebenfalls ein neuronales Netz, zugeführt. Dieser ist auf die Feinpositionierung von Gesichtern innerhalb der Bereiche trainiert und liefert eine geschätzte Position zusammen mit einer Kofidenz für jede der Hypothesen. Vaillant et al. geben als Grund für die Zweiteilung an, dass ein einziges auf die exakte Lokalisierung trainiertes Netz nicht die nötige Leistungsfähigkeit garantiert.

zu 4:

In WO 96/42040 ist ein dem in 1) beschriebenen Verfahren ähnliches Verfahren beschrieben, bei dem zur Gesichtserkennung eine Einrichtung zum Synthetisieren eines Musterprototypen sowie eine Bildklassifizierungseinheit vorgesehen sind. Musterprototypen, welche ein Gesicht repräsentieren und Musterprototypen, welche kein Gesicht repräsentieren, werden unter Verwendung einer Vielzahl von Beispielbildern in einem Trainingsverfahren zum Trainieren eines neuronalen Netzes synthetisiert.

In einer Anwendungsphase wird ein neu angelegtes Bild analysiert, indem der Abstand des angelegten Bildes zu jedem der Muster-Prototypen ermittelt wird und es wird eine Entscheidung auf der Basis der ermittelten Abstände getroffen dahingehend, ob das angelegte Bild ein Gesicht enthält oder nicht. Bei dem beschriebenen Verfahren wird, wie auch bei dem Verfahren gemäß 1) eine aufwendige Histogrammequalisierung durchgeführt.

zu 5:

FR-A-2691033 beschreibt ein Verfahren zum Lokalisieren eines Gesichtsobjekts in einem Standbild, wobei unter Verwendung normalisierter Pixelwerte und unter Verwendung unterschiedlicher Klassifikationsverfahren ermittelt wird, ob in dem Standbild ein Gesichtsobjekt enthalten ist oder nicht.

zu 6:

In dieser Veröffentlichung ist ein Verfahren zum Ermitteln der Korrelation zwischen zwei Bildern beschrieben, bei dem ein Fenster-basiertes Verfahren unter Verwendung einer Maske eingesetzt wird, wobei in den Fenstern die Summen der Pixelwerte der Pixel, welche sich in dem jeweiligen Fenster befinden, berücksichtigt werden.

zu 7:

Diese Veröffentlichung beschreibt einen Multifontklassifikator zur Klassifikation maschinell geschriebener Großbuchstaben. Gemäß dem hier beschriebenen System erfolgt eine Unterscheidung zwischen den verschiedenen Großbuchstaben. Die Buchstaben werden auf eine vorgegebene Größe normiert, so dass die Betrachtung verschiedener Auflösungsstufen unnötig ist. Bei den in dieser Veröffentlichung beschriebenen Vorgehensweisen erfolgt eine Zentrierung der Großbuchstaben, eine Größennormierung und eine Reduzierung der in dem Bild enthaltenen Störungen. Es werden binär quantisierte Rasterbilder gebildet. Unter Verwendung eines quadratischen Klassifikators erfolgt eine Klassifizierung eines auf oben beschriebene Weise gebildeten Merkmalsvektors auf einen der vorgegebenen, zu unterscheidenden Großbuchstaben.

Generell weisen die aus der Literatur bekannten Verfahren also den Nachteil eines erheblichen Rechenbedarfs auf. Auch eine Positionsbestimmung des Objekts bis in den Subpixelbereich ist nicht möglich.

Aufgabe der Erfindung ist es, die Nachteile der bekannten Lösungen zu vermeiden und ein wesentlich schnelleres und leistungsfähigeres Verfahren zur Lokalisierung von Objekten in Standbildern zu schaffen.

Dies wird durch die Kombination der Merkmale des Patentanspruches 1 erreicht. Wesentlich ist dabei, dass für das Herunterskalieren so genannte "running sums" zur Anwendung kommen, die Tabellen liefern, an Hand derer in einfacher Weise eine Durchschnittsbildung für verschiedene Auflösungsstufen möglich ist. Auch wird anstelle der Histogrammequalisierung die Normalisierung der Pixelwerte für alle möglichen Maskenpositionen durch Subtraktion der besten linearen Approximation sowie eine Transformation der Pixelwerte auf Mittelwert 0 und konstante Standardabweichung verwendet. Der verwendete Klassifikator realisiert eine lineare Funktion, welche die einfachste mögliche und am schnellsten zu berechnende Funktion auf den Pixelwerten innerhalb der Maske darstellt.

Durch die Weiterbildung gemäß Anspruch 2 läßt sich eine weitere Beschleunigung des Verfahrens erreichen, wenn die Normalisierung der Pixelwerte sowie die Transformation der Pixelwerte durch "running sums" in einem einzigen Berechnungsschritt zusammengefaßt werden.

Weiterhin zeigt der lineare Klassifikator für diejenige Wahl von Parametern die beste Leistungsfähigkeit, die als statistisches Optimum eine möglichst große Trennung von Klassifikationswerten für Objekte von den übrigen Werten der Klassifikatorfunktion erreicht. Dabei ermöglicht gemäß Anspruch 4 ein zweiter komplexerer Klassifikator eine weitere Verbesserung der Leistungsfähigkeit, wenn er vom ersten Klassifikator fälschlicherweise als Objekt identifizierte Maskenpositionen zurückweist.

In Analogie zum ersten linearen Klassifikator ist es zweckmäßig, daß gemäß Anspruch 5 der zweite Klassifikator mit einer quadratischen Funktion die nächst komplexe Funktion gegenüber der linearen auf den Pixelwerten realisiert, wobei die Parameter der quadratischen Funktion zudem nach einem entsprechenden Kriterium bestimmt werden.

Statt jedoch das statistische Optimum direkt zu bestimmen, ist es aus Gründen des verringerten Rechenaufwands zweckmäßig, die Parameter iterativ durch ein konjugiertes Gradientenverfahren zu bestimmen. Man erhält so schon nach wenigen Schritten der Iteration eine gute Approximation an die wahre Lösung.

Zur Feststellung der genauen Position des Objekts können sowohl der lineare, als auch der quadratische Klassifikator verwendet werden, wenn nach der Groblokalisierung durch ein konjugiertes Gradientenverfahren die optimale Position einer verzerrten Maske bestimmt wird.

Einzelheiten der Erfindung seien nachfolgend an Hand eines in der Zeichnung dargestellten Ausführungsbeispieles näher erläutert. Im Einzelnen zeigen

FIG 1    ein Ablaufdiagramm eines Verfahrens gemäß der Er findung,
FIG 2    ein Ausgangsbild für das Verfahren nach FIG 1,
FIG 3    das Ergebnis nach dem Herunterskalieren gemäß Schritt 3 des Verfahrens nach FIG 1,
FIG 4    die nachfolgende Maskierung gemäß Schritt 5 des Verfahrens nach FIG 1 und
FIG 5    die Feinpositionierung gemäß Schritt 8 des Verfahrens nach FIG 1.

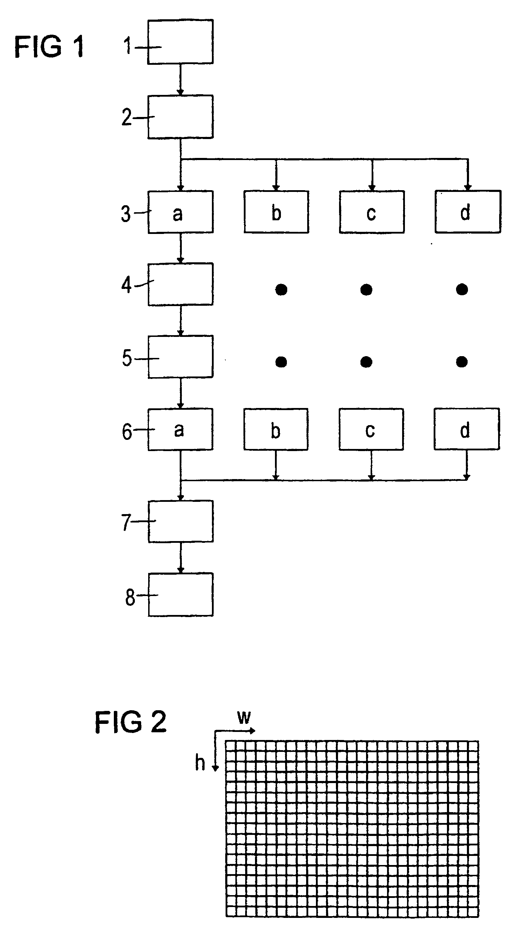

Ausgangspunkt für das Verfahren gemäß FIG 1 ist ein in bekannter Weise zur Auswertung bereitstehendes Bild entsprechend FIG 2. Ausgehend von diesem Bild werden zunächst entsprechend Schritt 2 von FIG 1 die "running sums" berechnet.

Unter "running sums" versteht man im einfachsten Fall eine Tabelle, die alle Summen der Pixelwerte eines Bildes innerhalb von denjenigen Rechtecken enthält, die bei $i = 0, j = 0$ starten. Für die bloßen Intensitäten des Bildes an den einzelnen Pixeln $I(i,j)$ kann man, wie bei J. P. Lewis 1995 *Fast Normalized Cross-Correlation* Vision Interface dargelegt ist, die "running sums" rekursiv berechnen nach

$$1) \qquad s(i,j) = I(i,j) + s(i-1,j) + s(i,j-1) - s(i-1,j-1).$$

Da die Addition separierbar ist, benötigt sie für ein Bild der Größe $w \times h$ nur $2wh$ Operationen und nicht $3wh$, wie in J. P. Lewis 1995 *Fast Normalized Cross-Correlation* Vision Interface behauptet wird.

Damit schafft man die Voraussetzung für eine effiziente Durchführung des Herunterskalierens auf verschiedene Auflösungsstufen gemäß Schritt 3, wobei im Beispiel von FIG 1 vier verschiedene Stufen a, b, c und d angedeutet sind. Das Herunterskalieren besteht aus blockweisen Durchschnittsbildungen der originalen Pixelwerte in nichtüberlappenden Rechtecken des Ausgangsbildes. Jede Auflösungsstufe a bis d entspricht dabei einer vorgegebenen Rechteckgröße. Je größer die Rechtecke sind, desto gröber wird einerseits die Auflösung und andererseits die Ausdehnung der Objekte im Originalbild, nach denen gesucht wird.

Sobald die Tabelle gemäß Schritt 2 berechnet worden ist, ist es sehr einfach, die blockweise Durchschnittsbildung vorzunehmen. Die Summe der Pixelwerte innerhalb eines Rechtecks der Größe $w_0 \times h_0$, das an der Position $(i_0, j_0)$ startet, ist durch

$$2) \qquad b(i_0, j_0, w_0, h_0) = s(i_0 + w_0 - 1, j_0 + h_0 - 1) - s(i_0 - 1, j_0 + h_0 - 1)$$

$$-s(i_0 + w_0 - 1, j_0 - 1) + s(i_0 - 1, j_0 - 1)$$

gegeben. Damit benötigt man nur drei Operationen. Da man nur der Summen über nichtüberlappende Rechtecke gleicher Größe bedarf, ist die Berechnung wiederum separierbar und man benötigt insgesamt $2wh/w_0 h_0$ Operationen. Für große Blockgrößen, wie sie in der Praxis vorkommen, ist dies vernachlässigbar gegenüber der Zeit zur Berechnung der Tabelle. Konventionelles Summieren über nichtüberlappende Blöcke erfordert mindestens $wh$ Operationen, so daß sich ein Vorteil des hier beschriebenen Verfahrens nur beim Herunterskalieren auf mindestens 2 verschiedene Größen von Blöcken ergibt. Wenn man zum Beispiel die Größe der Objekte innerhalb des Bildes um einen Faktor 2 variieren kann, benötigt man bei einem relativen Abstand der Skalierungsfaktoren von 1.2 insgesamt 4 verschiedene Auflösungen. Das hier vorgeschlagene Verfahren beschleunigt in diesem Fall die Bildung der herunterskalierten Bilder um etwa einen Faktor 2.

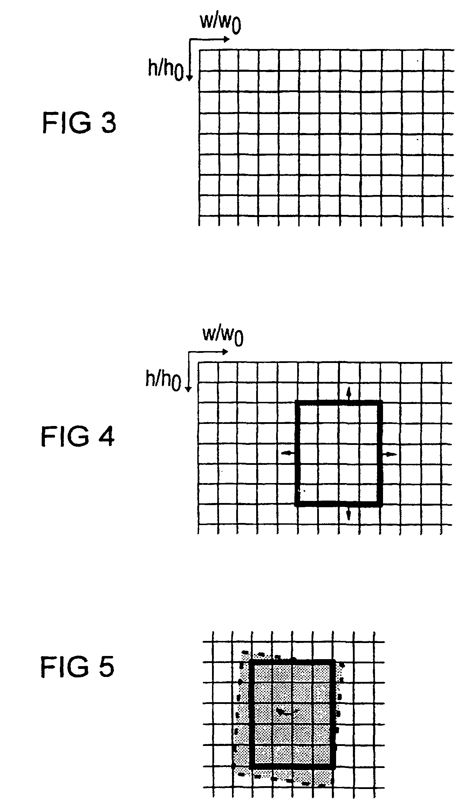

FIG 3 zeigt eines der herunterskalierten Bilder, das durch Durchschnittsbildung innerhalb von Rechtecken der Größe $w_0 \times h_0$ erzeugt wurde. Einem Pixel des herunterskalierten Bildes entsprechen also $w_0 \times h_0$ Pixel des Origi- nalbildes von FIG 2.

In Schritt 4 des Verfahrens werden die für die Vorverarbeitung der Pixelwerte nötigen "running sums" in Tabellenform berechnet. Mit der speziellen Form der im Folgenden beschriebenen Vorverarbeitung umgeht man eine zeitintensive Histogrammequalisierung der Pixelwerte in den maskierten Bildern. Die Vorverarbeitung in dem Verfahren gemäß der Erfindung besteht aus einer einfacheren, effizient zu berechnenden Transformation, die die Beziehungen

$\sum I_{ij} = 0$ (Mittelwert der Pixelwerte ist 0) und $\sum I_{ij}^2 = 1$ (Standardabweichung der Pixelwerte ist konstant) sicherstellt. Diese Transformation läßt sich auf effiziente Weise mit der aus den Verfahren 1 und 2 bekannten Subtraktion der besten linearen Approximation an die Pixelwerte innerhalb der Maske verbinden. Die Pixelwerte werden dabei gemäß der Beziehung

$$3) \qquad I(i,j) \leftarrow \left(I(i,j) - (ai + bj + c)\right)/\sigma$$

ersetzt. Die Parameter $a,b,c$ der besten Approximation erhält man durch Minimierung der Kostenfunktion

$$4) \qquad E(a,b,c) = \sum_{i=0,j=0}^{i=w-1,j=h-1} (I(i,j) - (ai + bj + c))^2$$

nach den Parametern $a,b,c$. Die Lösung des Optimierungsproblems ist gegeben durch

$$5) \qquad a = \frac{12}{w^2 - 1}\alpha, \qquad b = \frac{12}{h^2 - 1}\beta, \qquad c = \langle I(i,j)\rangle - \frac{6}{w+1}\alpha - \frac{6}{h+1}\beta ,$$

wobei

$$6) \qquad \alpha = \langle iI(i,j)\rangle - \frac{w-1}{2}\langle I(i,j)\rangle \text{ und } \beta = \langle jI(i,j)\rangle - \frac{h-1}{2}\langle I(i,j)\rangle.$$

Für $\sigma$ erhält man auf einfache Weise die Beziehung

$$7) \qquad \sigma^2 = \left\langle I^2(i,j)\right\rangle - \left\langle I(i,j)\right\rangle^2 - \frac{12}{w^2 - 1}\alpha^2 - \frac{12}{h^2 - 1}\beta^2 .$$

Alle benötigten Größen sind somit auf die Berechnung der Rechtecksummen $I(i,j)\rangle$,

$$\left\langle I^2(i,j)\right\rangle,$$

$\langle iI(i,j)\rangle, \langle jI(i,j)\rangle$ zurückgeführt, die sich wiederum mittels "running sums" effizient für viele verschiedene Auflösungsstufen berechnen lassen.

In Schritt 5 des Verfahrens wird, wie in FIG 4 dargestellt, eine Maske fester Größe über alle möglichen Positionen in den herunterskalierten Bildern bewegt. Für jede Position dieser Maske werden unter Zuhilfenahme der Tabellen aus Schritt 4 die Pixelwerte normalisiert und transformiert, um danach dem ersten Klassifikator zugeführt zu werden.

Der lineare Klassifikator nutzt die einfachst mögliche Funktion, eine lineare Funktion, zur Diskriminierung zwischen positiven und negativen Eingangsmustern. Das Maß ist also $l = \vec{g} \cdot \vec{I}$. Der diskriminierende Vektor $\vec{g}$ wird dabei so bestimmt, daß die Separation zwischen positiven Trainingsmustern (+) und negativen Trainingsmustern (-) im Vergleich zu ihren jeweiligen Varianzen möglichst groß ist. Diese Separation wird durch die Größe

$$8) \qquad r = \frac{m_+ - m_-}{\sqrt{\sigma_+^2 + \sigma_-^2}}$$

quantifiziert, wobei $m_x$ die jeweiligen Mittelwerte und $\sigma_x$ die jeweiligen Standardabweichungen des Maßes $l$ für positive beziehungsweise negative Trainingsmuster bezeichnet. Für ein lineares Maß resultiert diese Forderung in der Beziehung

$$9) \qquad \vec{g} \propto (V + W)^{-1}(\vec{\mu} - \vec{\nu}).$$

Dabei bezeichnen $\vec{\mu}$ und $\vec{\nu}$ das arithmetische Mittel und $V$ und $W$ die Kovarianzmatrix der positiven und negativen Trainingsmuster. Bei der Lösung dieses linearen Gleichungssystems durch die sogenannte Cholesky-Zerlegung (W. H. Press, S. A. Teukolsky, W. T. Vetterling und B. P. Flannery 1992 *Numerical Recipes in C - The Art of Scientific Computing* 2nd Edition Cambridge University Press) muß berücksichtigt werden, daß durch die vorverarbeitung der Muster ein insgesamt dreidimensionaler Nullraum entstanden ist. Im Gegensatz zum sehr zeitintensiven Training des ersten Klassifikators in Veröffentlichung 3, benötigt hier die Bestimmung eines diskriminierenden Vektors für eine Maskengröße von 20×20 durch Lösen der linearen Gleichung weniger als zehn Sekunden.

Dieser einfache lineare Klassifikator ist darauf trainiert, möglichst viele Bildausschnitte zurückzuweisen, die keinen Gesichtern entsprechen. Er bildet in dem hier vorgestellten System die erste Klassifikationsstufe. Die Erzeugung von positiven Trainingsmustern erfolgt dabei analog zu Veröffentlichung 2, wobei dem verwendeten Raum von Störparametern später noch eine besondere Bedeutung zukommen wird. Die Positionen im Bild, an denen Gesichter vermutet werden, sind dabei typischerweise sehr selten und spärlich über das gesamte Bild verteilt.

Die endgültige Entscheidung, ob an der betrachteten Stelle ein Gesicht vorliegt, erfolgt im Schritt 6 von FIG 1 durch den zweiten Klassifikator, der das quadratisches Maß

$$10) \qquad q = (\vec{I} - \vec{\kappa})^t M (\vec{I} - \vec{\kappa})$$

auf den Pixelwerten berechnet. Zweckmäßigerweise faßt man bei der Bestimmung der Parameter dieses Klassifikators nun ein Paar von Pixelindizes zu einem einzigen Index zusammen. Dann kann man nämlich die Matrix $M$ sowie die Kovarianzmatrizen $V$ und $W$ als Vektoren auffassen, und die Mittelwerte für das quadratische Maß über die positiven bzw. negativen Trainingsmuster lauten $\langle q \rangle_+ = M^t \tilde{v}$ und $\langle q \rangle_- = M^t \tilde{w}$ mit den Definitionen $\tilde{v} = V + (\vec{\mu} - \vec{\kappa}) \otimes (\vec{\mu} - \vec{\kappa})$ und $\tilde{w} = W + (\vec{\nu} - \vec{\kappa}) \otimes (\vec{\nu} - \vec{\kappa})$. Die Varianz für die positiven Trainingsmuster ist

$$\left\langle q^2 \right\rangle_+ - \langle q \rangle_+^2 = M^t \Phi M$$

mit

$$\Phi = \left\langle J_i J_k J_l J_m \right\rangle_+ - \left\langle J_i J_k \right\rangle_+ \left\langle J_l J_m \right\rangle_+$$

und für die negativen Trainingsmuster entsprechend mit $\Psi$, wobei $J_i = I_i - \kappa_i$ ist. Damit ist für die maximale Trennung des quadratischen Maßes die Größe

$$11) \qquad r = \frac{M^t (\tilde{V} - \tilde{W})}{\sqrt{M^t (\Phi + \Psi) M}}$$

nach $M$ und $\vec{\kappa}$ zu optimieren.

Da sowohl Nenner als auch Zähler von $r^2$ quadratisch in $\vec{\kappa}$ sind, ist die Optimierung nach $\vec{\kappa}$ relativ einfach und auf sie wird hier nicht näher eingegangen. Die Optimierung nach $M$ führt analog zum linearen Fall auf die Lösung der Gleichung

$$12) \qquad M = \Xi^{-1} B$$

mit $\Xi = \Phi + \Psi$ und $B = \tilde{V} - \tilde{w}$. In dieser Form ist das Problem wegen der großen Dimension von $\Xi$ (Anzahl der Pixel in der Suchmaske erhoben zur vierten Potenz) nicht behandelbar, so daß stattdessen die Funktion

$$13) \qquad f(M) = \frac{1}{2} M^t \Xi M - M^t B$$

nach $M$ minimiert wird, was zur gleichen Lösung führt. Dies erfolgt durch ein konjugiertes Gradientenverfahren (W. H.

Press, S. A. Teukolsky, W. T. Vetterling und B. P. Flannery 1992 *Numerical Recipes in C - The Art of Scientific Computing* 2$^{nd}$ Edition Cambridge University Press), wobei die besondere Form von $\Phi$ und $\Psi$ ausgenutzt wird, um die Dimensionalität des Problems zu verringern. Die Optimierung nach $M$ und nach $\vec{\kappa}$ wird abwechselnd ausgeführt, bis eine Konvergenz des Verfahrens erreicht ist.

Wie beim Verfahren gemäß der Veröffentlichung 3 arbeitet das hier beschriebene Verfahren zur Groblokalisierung von Objekten zweistufig. Jedoch wird im vorliegenden Fall die Zweiteilung nicht nur zur Verbesserung der Leistungsfähigkeit genutzt, sondern dient gezielt der Beschleunigung des Verfahrens. Der erste Klassifikator schließt möglichst viele Orte des Bildes - in der Praxis weit über 95% - für die weitere Verarbeitung durch einen zweiten, komplexeren und langsameren Klassifikator aus. Die Parameter der beiden Klassifikatoren werden nach demselben statistisch fundierten Verfahren bestimmt. Der erste Klassifikator realisiert eine lineare Funktion in den Pixelwerten, während durch den zweiten eine quadratische Funktion realisiert wird.

In Schritt 7 des Verfahrens werden die Ergebnisse der Klassifikation auf den verschiedenen Auflösungen a bis d zusammengeführt. Dies kann abhängig von der jeweiligen Aufgabenstellung auf verschiedene Weise erfolgen. Dazu kann man einerseits alle Maskenpositionen verwenden, an denen der Klassifikationswert eine vorgegebene Schwelle überschreitet. Wenn man aber beispielsweise weiß, daß im Ausgangsbild genau ein gesuchtes Objekt enthalten ist, dann kann man sich andererseits auf die Maskenposition mit der höchsten Konfidenz beschränken. Beim Ausführungsbeispiel von FIG 1 wird für die weitere Verarbeitung die zuletzt genannte Möglichkeit zugrunde gelegt.

In Schritt 8 des Verfahrens wird nun die Position des Objekts mit Subpixelgenauigkeit in dem herunterskalierten Bild bestimmt. Dazu wird ein Klassifikator verwendet, zu dessen Training nur ungestörte Trainingsmuster verwendet wurden. Wie in FIG 5 durch das grau unterlegte, nicht achsenparallele Rechteck angedeutet ist, wird die Lage der Suchmaske nun leicht gestört, um eine möglichst hohe Konfidenz dieses letzten Klassifikators zu erreichen. Im Raum der Störungen (kleine Rotationen $\vartheta$, leichte Translationen $\vec{t}$, Skalierungen $s$ entsprechend dem Abstand der Auflösungsstufen) wird versucht, die optimale Position zu finden. Bei Benutzung des linearen Maßes optimiert man beispielsweise die Funktion

$$14) \qquad E(\vartheta,\vec{t},s) = \vec{g}\cdot\vec{l}(\vartheta,\vec{t},s),$$

wobei $\vec{l}(\vartheta,\vec{t},\vec{s})$ die Pixelwerte bezeichnet, die man unter der entsprechenden Transformation der Suchmaske erhält. Die Pixelwerte des Bildes an nicht ganzzahligen Positionen erhält man durch bilineare Interpolation oder kubische Splines. Da bei einer derartigen Interpolation auch Gradienten von $\vec{l}(\vartheta,\vec{t},\vec{s})$ existieren und leicht berechnet werden können, kommt wiederum ein konjugiertes Gradientenverfahren zur Anwendung, das in der Regel nach wenigen Schritten konvergiert. Diese Methode der Feinpositionierung ist sowohl für das lineare als auch für das quadratische Maß anwendbar.

Literaturverzeichnis:

1. Kah-Kay Sung und Tomaso Poggio 1994 *Example-Based Learning for View-based Human Face Detection* MIT AI Lab AI Memo 1521

2. Henry A. Rowley, Shumeet Baluja und Takeo Kanade 1995 *Human Face Detection in Visual Scenes* CMU Technical Report CMU-CS-95-158R

3. R. Vaillant, C. Monrocq und Y. LeCun 1994 *Original Approach for the Localisation of Objects in Images* IEE Proceedings on Vision, Image, and Signal Processing, 141(4)

4. WO 96/42040

5. FR-A-2691033

6. L. J. Siegel et al, Parallel Image Correlation, Proceedings of the international conference on parallel processing, Seiten 190-198, 25.-28. August 1981

7. K. Poike, Untersuchungen zu einem Multifontklassifikator für Großbuchstaben, Wissenschaftliche Berichte AEG Telefunken, Bd. 47, Nr. 3/4, Seiten 119-130, 1974

**Patentansprüche**

1. Verfahren zur Lokalisierung eines Objekts in einem Standbild, welches eine Vielzahl von in Zeilen und Spalten angeordneten Pixel aufweist, wobei jedem Pixel ein Pixelwert zugeordnet ist, wobei der Pixelwert I(i, j) die Intensität des Pixels repräsentiert (1),

   a) bei dem Summenwerte der Pixelwerte des Standbildes gemäß folgender rekursiver Vorschrift gebildet werden beginnend bei einer Ausgangsposition i = 0 und j = 0 innerhalb des Standbildes (2):

   $$s(i, j) = I(i, j) + s(i - 1, j) + s(i, j - 1) - s(i - 1, j - 1),$$

   wobei mit

   - i ein Zeilenindex,
   - j ein Spaltenindex,
   - s(i, j) ein Summenpixelwert der Pixelwerte I(i, j), welche in einem Rechteck liegen, ausgehend von der Ausgangsposition i = 0 und j = 0 bis zu der mit dem Zeilenindex i und dem Spaltenindex j bezeichneten Position,

   bezeichnet wird,

   b) bei dem das Standbild unter Verwendung der gebildeten Summenpixelwerte auf verschiedene Auflösungsstufen herunterskaliert wird (3),

   c) bei dem folgende Verfahrensschritte durchgeführt werden für unterschiedliche Positionen einer Maske in einem herunterskalierten Bild der herunterskalierten Bilder, wobei jeweils mittels der Maske an einer Position ein Teilbild definiert wird (4, 5):

   c1) unter Verwendung der Summenpixelwerte der Pixel des Teilbildes werden die Pixelwerte der Pixel des Teilbildes normalisiert durch Subtraktion der besten linearen Approximation 1 der Pixel des Teilbildes gemäß folgender Vorschrift:

   $$1 = (a \cdot i + b \cdot j + c)$$

   wobei mit a, b und c Parameter bezeichnet werden, welche durch Minimierung folgender Kostenfunktion E(a, b, c) bestimmt werden:

   $$E(a, b, c) = \sum_{i=0, j=0}^{i=w-1, j=h-1} (I(i, j) - (a \cdot i + b \cdot j + c))^2,$$

   wobei mit w die Zahl von in dem Teilbild enthaltenen Zeilen und mit h die Zahl von in dem Teilbild enthaltenen Spalten bezeichnet werden,
   c2) mittels eines linearen Klassifikators wird eine Bewertungsangabe ermittelt, mit der angegeben wird, ob das Objekt in dem Teilbild enthalten ist oder nicht.

2. Verfahren gemäß Anspruch 1,
   bei dem für den Fall, dass von dem linearen Klassifikator ermittelt worden ist, dass das Objekt in dem Teilbild vorhanden ist, mittels eines zweiten Klassifikators, welcher eine quadratische Klassifizierungsfunktion verwendet, eine zweite Bewertungsangabe ermittelt wird, mit der angegeben wird, ob das Objekt in dem Teilbild enthalten ist oder nicht (6).

3. Verfahren gemäß Anspruch 1 oder 2,

bei dem die Parameter a, b und c gemäß folgenden Vorschriften ermittelt werden:

$$a = \frac{12}{w^2 - 1} \cdot \alpha,$$

$$b = \frac{12}{h^2 - 1} \cdot \beta,$$

$$c = \langle I(i, j) \rangle - \frac{6}{w + 1} \cdot \alpha - \frac{6}{h + 1} \cdot \beta,$$

mit

$$\alpha = \langle i \cdot I(i, j) \rangle - \frac{W - 1}{2} \cdot \langle I(i, j) \rangle$$

und

$$\beta = \langle j \cdot I(i, j) \rangle - \frac{h - 1}{2} \cdot \langle I(i, j) \rangle,$$

wobei mit
$\langle I(i, j) \rangle$ eine Summe der Pixelwerte der Pixel des Teilbildes bezeichnet wird.

**4.** Verfahren gemäß Anspruch 3,
bei dem unter Verwendung der Summenpixelwerte der Pixel des Teilbildes die Pixelwerte der Pixel des Teilbildes normalisiert werden durch Subtraktion der besten linearen Approximation der Pixel des Teilbildes gemäß folgender Vorschrift:

$$I(i, j) \leftarrow \frac{(I(i, j) - (a \cdot i + b \cdot j + c))}{\sigma}$$

mit

$$\sigma = \sqrt{\langle I^2(i, j) \rangle - \langle I(i, j) \rangle^2 - \frac{12}{w^2 - 1} \cdot \alpha^2 - \frac{12}{h^2 - 1} \cdot \beta^2},$$

wobei mit

$$\langle I^2(i, j) \rangle$$

die Summe der Quadrate der Pixelwerte der Pixel des Teilbildes bezeichnet wird.

**5.** Verfahren gemäß einem der Ansprüche 1 bis 4,
bei dem für den Fall, dass ermittelt worden ist, dass ein Objekt in dem Standbild enthalten ist, die Position des Objekts in dem Standbild mit Subpixelgenauigkeit in dem herunterskalierten Bild bestimmt wird mittels eines Gradientenverfahrens mit Interpolation oder kubischen Splines (8).

**6.** Verfahren gemäß einem der Ansprüche 1 bis 5,
bei dem als Objekt ein Gesicht lokalisiert wird.

## EP 1 021 787 B1

**Claims**

1. A method for localizing an object in a still picture, which has a plurality of pixels arranged in lines and columns, whereby each pixel is associated with a pixel value, whereby the pixel value I(i,j) represents the intensity of the pixel (1),

    a) in which the total value of the pixel values of the still picture according to the following recursive rule are formed beginning with a starting position i = 0 and j = 0 within the still picture (2):

    $$s(i, j) = I(i, j) + s(i - 1, j) + s(i, j - 1) - s(i - 1, j - 1),$$

    whereby with

    - i, a line index is designated,
    - j, a column index is designated,
    - s(i, j), a total pixel value of the pixel values I(i, j) is designated, which lies in a rectangle, originating from the starting position i = 0 and j = 0 up to the position designated with the line index i and the column index j,

    b) in which the still picture is scaled down (3) with use of the formed total pixel value at various resolution stages,

    c) in which the following method steps are performed for different positions of a mask in a down-scaled image of the down-scaled picture, whereby, respectively, by means of the mask at one position, a partial image is defined (4, 5),

    c1) with use of the total pixel value of the pixels of the partial image, the pixel values of the pixels of the partial image are normalized by subtraction of the best linear approximation 1 of the pixels of the partial image according to the following equation:

    $$1 = (a \cdot i + b \cdot j + c)$$

    whereby with a, b, and c, parameters are designated, which are determined by minimizing of the following cost function E(a, b, c):

    $$E(a, b, c) = \sum_{i=0, j=0}^{i=w-1, j=h-1} (I(i, j) - (a \cdot i + b \cdot j + c))^2,$$

    whereby with w, the number of lines contained in the partial image is designated and with h, the number of columns contained in the partial image is designated,

    c2) by means of a linear classifier, a valuation statement is determined, with which it is provided whether the object is contained in the partial image or not.

2. The method according to claim 1, in which for the case in which it is determined from the linear classifier that the object is contained in the partial image, by means of a second classifier, which uses a quadratic classification function, a second valuation statement is determined, with which it is provided whether the object is contained in the partial image or not (6).

3. The method according to claim 1 or 2, in which the parameters a, b, c are determined according to the following equations:

$$a = \frac{12}{w^2 - 1} \cdot \alpha,$$

$$b = \frac{12}{h^2 - 1} \cdot \beta,$$

$$c = \langle I(i, j) \rangle - \frac{6}{w + 1} \cdot \alpha - \frac{6}{h + 1} \cdot \beta,$$

with

$$\alpha = \langle i \cdot I(i, j) \rangle - \frac{w - 1}{2} \cdot \langle I(i, j) \rangle$$

and

$$\beta = \langle j \cdot I(i, j) \rangle - \frac{h - 1}{2} \cdot \langle I(i, j) \rangle,$$

whereby with
$\langle I(i,j) \rangle$, a summation of the pixel values of the pixels of the partial image is designated.

4. The method according to claim 3, in which with the use of the total pixel values of the pixels of the partial image, the pixel values of the pixels of the partial image are normalized by subtraction of the best linear approximation of the pixels of the partial image according to the following equation:

$$I(i, j) \leftarrow \frac{I(i, j) - (a \cdot i + b \cdot j + c))}{\sigma}$$

with

$$\sigma = \sqrt{\langle I^2(i, j) \rangle - \langle I(i, j) \rangle^2 - \frac{12}{w^2 - 1} \cdot \alpha^2 - \frac{12}{h^2 - 1} \cdot \beta^2},$$

whereby with

$$\langle I^2(i,j) \rangle,$$

the summation of the square of the pixel values of the pixels of the partial image is designated.

5. The method according to one of claims 1 through 4, in which for the case in which it is determined that an object is contained in the still picture, the position of the object in the still picture is determined with subpixel accuracy in the scaled-down image by means of a gradient method with interpolation or cubic splines (8).

6. The method according to one of claims 1 through 5, in which as the object, a face is localized.

**Revendications**

1. Procédé pour la localisation d'un objet dans une image fixe, présentant une pluralité de pixels rangés en lignes et en colonnes, une valeur de pixel étant attribuée à chaque pixel, la valeur du pixel I(i,j) représentant l'intensité du pixel (1),

a) dans lequel des sommes des valeurs des pixels sont formées selon la prescription récursive suivante, à partir d'un position initiale i = 0 et j = 0, à l'intérieur de l'image fixe (2):

$$s(i, j) = I(i, j) + s(i - 1, j) + s(i, j - 1) - s(i - 1, j - 1),$$

- i désignant un indice de ligne,
- j désignant un indice de colonne,
- s (i, j) désignant une somme des valeurs des pixels I(i, j) qui se situent dans un rectangle, à partir de la position initiale i = 0 et j = 0, jusqu'à la position désignée par l'indice de ligne i et par l'indice de colonne j,

b) dans lequel l'image est réduite à différents degrés de résolution, sous utilisation de la somme de la valeur des pixels (3),

c) dans lequel les étapes suivantes de procédé sont réalisées pour différentes positions d'un masque dans une image réduite parmi les images réduites, le masque définissant respectivement une image partielle sur une position (4, 5),

c1) par utilisation de la somme de la valeur des pixels, les valeurs des pixels de l'image partielle étant normalisées, par soustraction de la meilleure approximation linéaire 1 des pixels de l'image partielle, selon la prescription suivante :

$$1 = (a \cdot i + b \cdot j + c)$$

a, b et c désignant des paramètres qui sont déterminés par la minimisation de la fonction de coût E(a, b, c) suivante :

$$E(a, b, c) = \sum_{i=0, j=0}^{i=w-1, j=h-1} (I(i, j) - (a \cdot i + b \cdot j + c))^2,$$

w désignant le nombre de lignes contenues dans l'image partielle et h désignant le nombre de colonnes contenues dans l'image partielle,

c2) à l'aide d'un classificateur linéaire, une indication d'évaluation étant déterminée, permettant d'indiquer si l'objet est contenu dans l'image partielle ou non.

2. Procédé selon la revendication 1, dans lequel, dans le cas où le classificateur linéaire a déterminé que l'objet est présent dans l'image partielle, un second classificateur, utilisant une fonction de classification quadratique déterminant une seconde indication d'évaluation, permettant d'indiquer si l'objet est contenu dans l'image partielle ou non.

3. Procédé selon la revendication 1 ou 2, dans lequel les paramètres a, b et c sont déterminés selon les prescriptions suivantes :

$$a = \frac{12}{w^2 - 1} \cdot \alpha,$$

$$b = \frac{12}{h^2 - 1} \cdot \beta,$$

$$c = \langle I(i, j) \rangle - \frac{6}{w + 1} \cdot \alpha - \frac{6}{h + 1} \cdot \beta,$$

avec

$$\alpha = \langle i \cdot I(i, j) \rangle - \frac{w - 1}{2} \cdot \langle I(i, j) \rangle$$

et

$$\beta = \langle j \cdot I(i, j) \rangle - \frac{h - 1}{2} \cdot \langle I(i, j) \rangle,$$

$\langle I(i,j) \rangle$ désignant une somme des valeurs des pixels d'une image partielle.

4. Procédé selon la revendication 3, dans lequel par utilisation des valeurs des sommes des pixels de l'image partielle, les valeurs des pixels de l'image partielle sont normalisées, par soustraction de la meilleure approximation linéaire des pixels de l'image partielle, selon la prescription suivante :

$$I(i, j) \leftarrow \frac{(I(i, j) - (a \cdot i + b \cdot j + c))}{\sigma}$$

avec

$$\sigma = \sqrt{\langle I^2(i, j) \rangle - \langle I(i, j) \rangle^2 - \frac{12}{w^2 - 1} \cdot \alpha^2 - \frac{12}{h^2 - 1} \cdot \beta^2},$$

$$\langle I^2(i,j) \rangle$$

désignant la somme du carré des valeurs des pixels de l'image partielle.

5. Procédé selon l'une des revendications 1 à 4, dans lequel, s'il a été déterminé qu'un objet est contenu dans l'image fixe, la position de l'objet est déterminée dans l'image réduite, avec une précision de sous-pixels, à l'aide d'un procédé utilisant les gradients avec interpolation ou splines cubiques.

6. Procédé selon l'une des revendications 1 à 5, dans lequel l'objet localisé est un visage.

**FIG 1**

**FIG 2**

FIG 3

FIG 4

FIG 5